(19) Europäisches Patentamt
European Patent Office
Office européen des brevets

(11) **EP 4 177 315 A1**

(12) **EUROPEAN PATENT APPLICATION**
published in accordance with Art. 153(4) EPC

(43) Date of publication:
**10.05.2023 Bulletin 2023/19**

(21) Application number: **21831998.6**

(22) Date of filing: **21.06.2021**

(51) International Patent Classification (IPC):
**C09C 1/64** (2006.01)       **C09C 3/12** (2006.01)
**C09D 5/29** (2006.01)       **C09D 201/00** (2006.01)
**C09D 7/62** (2018.01)

(52) Cooperative Patent Classification (CPC):
**C09C 1/64; C09C 3/12; C09D 5/29; C09D 7/62;
C09D 201/00**

(86) International application number:
**PCT/JP2021/023470**

(87) International publication number:
**WO 2022/004470 (06.01.2022 Gazette 2022/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.07.2020 JP 2020115438**

(71) Applicant: **Nippon Paint Automotive Coatings Co.,
Ltd.**
**Hirakata-shi, Osaka 573-1153 (JP)**

(72) Inventors:
• **YABUSHITA, Chisato**
  **Hirakata-shi, Osaka 573-1153 (JP)**
• **KAMBAYASHI, Yuka**
  **Hirakata-shi, Osaka 573-1153 (JP)**
• **UEHARA, Tamami**
  **Hirakata-shi, Osaka 573-1153 (JP)**
• **SAKOYAMA, Kazuaki**
  **Hirakata-shi, Osaka 573-1153 (JP)**

(74) Representative: **Herzog IP Patentanwalts GmbH
Steinstraße 16-18
40212 Düsseldorf (DE)**

(54) **COATING COMPOSITION AND METHOD FOR PRODUCING COATING COMPOSITION**

(57)    The present invention provides a coating film which has luster of conventional metallic coating films, while being capable of taking on a pale color, and which has a unique design. A coating composition which contains a coating film-forming resin and a pigment, wherein: the pigment contains a scale-like vapor deposition metal pigment; a cured coating film of this coating composition has a sparkle intensity (Si) of 5 or more at the incident angle of 45°, a sparkle area (Sa value) of 10 or more, a graininess value (G value) of from 5 to 10, and a color saturation C* of 5 or less at the incident angle of 45° and at the light reception angle of 45°.

EP 4 177 315 A1

**Description**

TECHNICAL FIELD

The present invention relates to a coating composition and a method for producing a coating composition.

BACKGROUND ART

A plurality of coating films having respective distinct roles are sequentially formed on the surface of an object to be coated such as an automobile body, and the coating films protect the object and concurrently impart aesthetic appearance and excellent design to the object. A forming method of such a plurality of coating films generally includes forming an under-coating film such as an electrodeposition coating film on an object to be coated having excellent electric conductivity, and sequentially forming an optional intermediate coating film, and a top-coating film on the under-coating film. In these coating films, it is the top-coating film including a base coating film and a clear coating film that significantly affects, in particular, the appearance and design of the coating films. In automobiles, in particular, the appearance and design of the top-coating film, which includes the base coating film and the clear coating film and is formed on a body, are of great importance.

Base coating films can be roughly classified into coating films which contain no flake-shaped pigment and are referred to as so-called "solid color", and coating films which contain a flake-shaped pigment with an impression of sparkling (glitter appearance or brilliance). A typical example of the flake-shaped pigment with an impression of sparkling is a flake-shaped aluminum pigment. A base coating film containing the flake-shaped aluminum pigment can exhibit metallic tone gloss (metallic impression).

In recent years, coating films having a high degree of designability have been developed in the field of automobile coatings. This trend correlates to consumers' tendency to prefer, to the so-called solid color, a color of coating which gives an impression of sparkling leading to a high-quality appearance. Furthermore, there is a demand for a more distinctive design, e.g., a coating film not only giving an impression of sparkling but also having a higher luminance than conventional coating films that give an impression of sparkling, due to the consumers' diversified preferences and aspirations of uniqueness.

WO 2019/131957 (Patent Document 1) discloses a coating composition comprising: a binder component (A); a flake-like aluminum pigment (B) having an average particle diameter (d50) within a range of 18 um to 25 um; and a flake-like pigment (C) being a flake-like pigment other than a flake-like aluminum pigment and having an average particle diameter (d50) within a range of 8 um to 30 $\mu$m. Patent Document 1 discloses that this coating composition can be used to form a coating film giving the impression of being highly granular and reduced generation of metallic unevenness.

Patent Document 1: PCT International Publication No. WO 2019/131957, Specification

DISCLOSURE OF THE INVENTION

Problems to be Solved by the Invention

The aforementioned Patent Document 1 discloses that a combination of the specific flake-like aluminum pigment (B) and the specific flake-like pigment (C) being a flake-like pigment other than a flake-like aluminum pigment, or the disclosed coating composition can be used to form a coating film giving the impression of being highly granular and reduced generation of metallic unevenness. On the other hand, an object of the present invention is to provide a coating film having a distinctive design where the coating film gives an impression of sparkling similar to that exhibited by conventional metallic coating films and also exhibits a pale-light color tone.

Means for Solving the Problems

In order to solve the aforementioned problems, the present invention provides the following aspects.

A first aspect of the present invention relates to a coating composition comprising a coating-film-forming resin and a pigment, wherein

the pigment comprises a flake-shaped vapor-deposited metal pigment, and
a cured coating film of the coating composition has a sparkle intensity (Si) of 5 or more at an incident angle of 45°, a sparkle area (Sa value) of 10 or more at an incident angle of 45°, and a graininess value (G value) of 5 or more and 10 or less, and
the cured coating film has a chroma C* at an incident angle of 45° and a light-receiving angle of 45° of 5 or less.

A second aspect of the present invention relates to the coating composition according to the first aspect, wherein the cured coating film has a flip-flop value of 1.1 or more and less than 2.

A third aspect of the present invention relates to the coating composition according to the first or second aspect, wherein the flake-shaped vapor-deposited metal pigment has a first protective layer, a vapor-deposited metal layer and a second protective layer in this order, and
the flake-shaped vapor-deposited metal pigment has an average particle diameter of 10 to 150 um, an average thickness of 0.5 to 10 $\mu$m, and an aspect ratio of 5 to 50.

A fourth aspect of the present invention relates to the coating composition according to the third aspect, wherein the first and second protective layers each have an average thickness of 0.5 to 3 um, and
the vapor-deposited metal layer has an average thickness of 5 to 100 nm.

A fifth aspect of the present invention relates to the coating composition according to the third or fourth aspect, wherein the first and second protective layers each comprise a silicone component.

A sixth aspect of the present invention relates to the coating composition according to any one of the third to fifth aspects, wherein the vapor-deposited metal layer comprises aluminum.

A seventh aspect of the present invention relates to the coating composition according to any one of the first to sixth aspects, wherein the amount of the flake-shaped vapor-deposited metal pigment comprised in the coating composition is in the range of 0.1 to 40 parts by mass based on 100 parts by mass of the resin solid content of the coating-film-forming resin.

An eighth aspect of the present invention relates to a method for producing a cured coating film, the method comprising applying the coating composition according to any one of the first to seventh aspects to an object to be coated, and subsequently, heating and curing the coating composition, wherein
the cured coating film has a sparkle intensity (Si) of 5 or more at an incident angle of 45°, a sparkle area (Sa value) of 10 or more at an incident angle of 45°, and a graininess value (G value) of 5 or more and 10 or less, and a chroma C* at an incident angle of 45° and a light-receiving angle of 45° of 5 or less.

A ninth aspect of the present invention relates to an article comprising a cured coating film of the coating composition according to any one of the first to seventh aspects.

Effects of the Invention

The coating composition can be used to form a coating film having a higher sparkle than coating films formed using conventional metallic coating compositions.

PREFERRED MODE FOR CARRYING OUT THE INVENTION

The coating composition described above contains a coating-film-forming resin and a pigment. The coating composition is characterized in that the pigment includes a flake-shaped vapor-deposited metal pigment, and a cured coating film of the coating composition has a sparkle intensity (Si) of 5 or more at an incident angle of 45°, a sparkle area (Sa value) of 10 or more at an incident angle of 45°, and a graininess value (G value) of 5 or more and 10 or less, and a chroma C* of 5 or less. Hereinafter, each component contained in the coating composition will be described.

Pigment

The coating composition contains the pigment, and the pigment is characterized in that it includes a flake-shaped vapor-deposited metal pigment. The pigment may contain a pigment other than the flake-shaped vapor-deposited metal pigment, as needed. Examples of other pigment include coloring pigment and extender pigment, etc. Examples of the coloring pigment include: inorganic coloring pigments such as titanium dioxide, carbon black, iron oxides, and yellow iron oxide; and various organic coloring pigments, for example, phthalocyanine pigments such as phthalocyanine blue and phthalocyanine green; azo pigments such as azo red, azo yellow and azo orange; quinacridone pigments such as quinacridone red, Cinquasia Red and Cinquasia Magenta; perylene pigments such as perylene red and perylene maroon; carbazole violet, anthrapyridine, flavanthrone yellow, isoindoline yellow, indanthrone blue, dibromo anza slon red, anthraquinone red, diketopyrrolopyrrole, and the like. Examples of the extender pigment include calcium carbonate, barium sulfate, clay, talc, etc. The pigment may further contain a rust-preventive pigment, as needed.

The coating composition may contain, as the pigment, a flake-shaped metal pigment other than the flake-shaped vapor-deposited metal pigment, as needed. Examples of such a pigment include metallic sparkling pigments (pulverized metallic sparkling pigments) of aluminum, copper, zinc, iron, nickel, tin, aluminum oxide and alloys thereof, etc., interference mica pigments, white mica pigments, graphite pigments, glass flake pigments, etc.

When the pigment mentioned above is contained, the pigment should be contained such that it does not impair the effects of the present invention. The pigment may be contained in the range of, for example, 0.1 to 30 parts by mass based on 100 parts by mass of the resin solid content, so long as the effect of the present invention is not impaired.

Flake-Shaped Vapor-Deposited Metal Pigment

The flake-shaped vapor-deposited metal pigment refers to a flake-shaped pigment having a vapor-deposited metal layer. The flake-shaped vapor-deposited metal pigment preferably has a first protective layer, a vapor-deposited metal layer and a second protective layer in this order.

The flake-shaped vapor-deposited metal pigment can be produced, for example, by forming a release layer on a resin substrate, then vapor-depositing a metal layer thereon, and subsequently releasing and pulverizing the metal layer in a solvent, to obtain a flake-shaped powder dispersion including a flake-shaped powder. When a protective-layer-forming component is included in the flake-shaped powder dispersion in the production procedure described above, the flake-shaped vapor-deposited metal pigment having the first protective layer, the vapor-deposited metal layer and the second protective layer in this order can be suitably prepared.

Examples of the resin substrate that can be used in the preparation of the flake-shaped vapor-deposited metal pigment include a polyethylene terephthalate (PET) film, a polyethylene naphthalate (PEN) film, a polycarbonate (PC) film, etc.

A resin soluble in a solvent contained in the flake-shaped powder dispersion such as, for example, a cellulose acetate butyrate resin and a polyvinyl acetal resin, can be suitably used as a component for forming the release layer. The release-layer-forming component may be applied to the resin substrate via a wet coating procedure (e.g., gravure coating procedure) and the like, which may be commonly employed by a person skilled in the art, to form the release layer. The concentration of the resin contained in the release-layer-forming component may be appropriately selected depending on the type of the resin. The thickness of the release layer is preferably in the range of, for example, 30 to 100 nm in terms of dry film thickness.

Examples of the metal to be vapor-deposited on the release layer include aluminum, copper, gold, silver, zinc, titanium, chromium, nickel, nickel chromium, stainless-steel, and mixtures and alloy thereof (e.g., brass, etc.), and the like. Aluminum may be suitably used as the metal in light of its availability and ease of handling, etc.

The metal layer may be formed via a dry coating procedure (e.g., sputtering, vacuum deposition, etc.), which may be commonly employed by a person skilled in the art. The conditions for the vapor deposition, etc. may be appropriately selected depending on the type of the metal, etc. The thickness of the metal layer is preferably in the range of 5 to 100 nm, and more preferably in the range of 20 to 75 nm.

The solvent which may be used for releasing the metal layer in the solvent can at least partially dissolve the release layer. An ester solvent such as butyl acetate, and a ketone solvent such as acetone, etc. may be suitably used as the solvent. The release of the metal layer may be performed by immersing the resin substrate having the release layer and the metal layer formed thereon in the solvent, and scraping off the metal layer overlaid on the surface of the resin substrate using, for example, a doctor blade, etc.

The method for pulverizing the metal layer in the solvent is exemplified by a wet pulverization method, which may be commonly employed by a person skilled in the art. For example, the pulverization may be performed using an ultrasound homogenizer, or according to a procedure in which coarse pulverization is performed with a homomixer, and fine pulverization is performed with a high-pressure homogenizer. The pulverization in this step is preferably performed such that the average particle diameter (average major diameter) of the resulting flake-shaped vapor-deposited metal pigment is in the range of 10 to 150 $\mu$m.

As referred to herein, the measurement of the average particle diameter (average major diameter) of the flake-shaped vapor-deposited metal pigment may be performed by observing the flake-shaped vapor-deposited metal pigment using a shape-analyzing laser microscope (e.g., VK-X 250 from Keyence Corporation, etc.), and calculating a number average of the maximum length (major diameter) of 100 randomly-selected pigments.

After the pulverization, a dispersion is obtained in which the pulverized vapor-deposited metal layer in the form of a flake is dispersed. When the protective-layer-forming component is contained in this dispersion, a protective layer can be provided on the flake-shaped vapor-deposited metal layer. Thus, the flake-shaped vapor-deposited metal pigment having the first protective layer, the vapor-deposited metal layer and the second protective layer in this order can be suitably prepared.

For example, a silane coupling agent, a siloxane compound or the like may be suitably employed as the protective-layer-forming component. For the silane coupling agent, for example, a silane coupling agent having one or more organic functional group(s) selected from the group consisting of an epoxy group, an amino group and an isocyanate group is preferably used, and a silane coupling agent having an epoxy group is more preferably used. Examples of the siloxane compound include a carboxyl-group-containing siloxane compound, etc. One type of these silane coupling agents and siloxane compounds may be used alone, and two or more types of them may be used in combination. Incidentally, when the protective layer is formed according to the procedure described above, a resin component of a release agent (e.g., cellulose acetate butyrate resin, polyvinyl acetal resin, etc.) may be included in the protective layer.

According to the procedure described above, the flake-shaped vapor-deposited metal pigment having the first protective layer, the vapor-deposited metal layer and the second protective layer in this order, wherein the first and second protective layers each contain the silicone component, can be suitably prepared.

In the formation of the protective layer, coloring may be optionally performed. For example, a colored protective layer can be formed by using a silane coupling agent as the protective-layer-forming component, and further incorporating an organic coloring pigment into the dispersion. The organic coloring pigment mentioned above may be used as the organic coloring pigment in the preparation of the colored protective layer. More specific examples of the organic coloring pigment include polycyclic pigments such as compounds having a fused ring (e.g., phthalocyanine pigments, etc.), azo pigments, which have a double bond between the nitrogen atoms, etc. Such an organic coloring pigment, when used, gives a flake-shaped vapor-deposited metal pigment which has the first and second protective layers each containing the silicone component and further being colored.

The flake-shaped vapor-deposited metal pigment is preferably a pigment having a first protective layer, a vapor-deposited metal layer and a second protective layer in this order, wherein each of the first and second protective layers preferably has an average thickness of 0.5 to 3 um. The adjustment of the average thickness of each of the first and second protective layers can be achieved by adjusting the concentration of the protective-layer-forming component within a suitable range. An exemplary method for such adjustment includes adjusting the concentration of the protective-layer-forming component contained in the dispersion in the range of 0.1 to 5 parts by mass based on 100 parts by mass of the metal layer contained in the dispersion, etc.

The flake-shaped vapor-deposited metal pigment preferably has an average thickness of 0.5 to 10 um. The average thickness of the flake-shaped vapor-deposited metal pigment can be measured by forming a coating film containing the flake-shaped vapor-deposited metal pigment, measuring the thickness of the pigments on a cross section of the resulting coating film using a transmission electron microscope (TEM), and calculating an average of the measurements.

The flake-shaped vapor-deposited metal pigment preferably has an aspect ratio in the range of 5 to 50.

The flake-shaped vapor-deposited metal pigment may be a commercially available product. Examples of the commercially available product include ELgee neo series (e.g., #200, #325, #500, etc.) manufactured by OIKE & Co., Ltd., and examples of a particularly preferable product include ELgee neo Extra White series. Other commercially available products which are produced by the same procedure as the procedure described above may be used as the commercially available product.

The amount of the flake-shaped vapor-deposited metal pigment contained in the coating composition is preferably in the range of 0.1 to 40 parts by mass, more preferably in the range of 1 to 40 parts by mass, and more preferably in the range of 3 to 40 parts by mass, based on 100 parts by mass of the resin solid content.

Coating-Film-Forming Resin

The coating composition contains a coating-film-forming resin. Examples of the coating-film-forming resin include an acrylic resin, a polyester resin, a polyurethane resin, an epoxy resin, a fluorocarbon resin, a silicone resin, etc. The coating composition may be an aqueous coating composition, or a solvent-borne coating composition.

When the coating composition is an aqueous coating composition, the coating composition preferably contains, for example, an acrylic resin emulsion (including an acrylic silicone resin emulsion, an acrylic urethane resin emulsion, etc.), an acrylic resin dispersion (including an acrylic silicone resin dispersion, an acrylic urethane resin dispersion, etc.), a water-soluble acrylic resin, a polyester resin dispersion, a polyurethane resin dispersion, an epoxy resin dispersion, etc., as the coating-film-forming resin. One type of these resins may be used alone, or two or more types thereof may be used in combination. These resins can be prepared according to any method commonly employed by a person skilled in the art. The resins may be a commercially available product.

Preferable embodiments include, for example, the use of an acrylic resin emulsion and/or a water-soluble acrylic resin, the use of an acrylic resin emulsion, a water-soluble acrylic resin and a polyester resin dispersion, the use of an acrylic resin emulsion, a water-soluble acrylic resin and a polyurethane resin dispersion, and the like.

The acrylic resin emulsion can be prepared, for example, by emulsion polymerization of a mixture of $\alpha,\beta$-ethylenically unsaturated monomers. Examples of a preferable $\alpha,\beta$-ethylenically unsaturated monomer used for the preparation of the acrylic resin emulsion include a (meth)acrylic acid ester, an $\alpha,\beta$-ethylenically unsaturated monomer having an acid group, and an $\alpha,\beta$-ethylenically unsaturated monomer having a hydroxyl group.

Examples of the (meth)acrylic acid ester include methyl (meth)acrylate, ethyl (meth)acrylate, propyl (meth)acrylate, n-butyl (meth)acrylate, isobutyl (meth)acrylate, t-butyl (meth)acrylate, 2-ethylhexyl (meth)acrylate, lauryl (meth)acrylate, phenyl (meth)acrylate, isobornyl (meth)acrylate, cyclohexyl (meth)acrylate, t-butylcyclohexyl (meth)acrylate, dicyclopentadienyl (meth)acrylate, dihydrodicyclopentadienyl (meth)acrylate, etc. It should be noted that as used herein, the term "(meth)acrylic acid ester" or "(meth)acrylate" refers to both an acrylic acid ester and a methacrylic acid ester.

Examples of the $\alpha,\beta$-ethylenically unsaturated monomer having an acid group include acrylic acid, methacrylic acid, crotonic acid, 2-acryloyloxyethylphthalic acid, 2-acryloyloxyethylsuccinic acid, $\omega$-carboxy-polycaprolactone mono(meth)acrylate, isocrotonic acid, $\alpha$-hydro-$\omega$-((1-oxo-2-propenyl)oxy)poly(oxy(1-oxo-1,6-hexanediyl)), maleic acid, fumaric acid, itaconic acid, 3-vinylsalicylic acid, 3-vinylacetylsalicylic acid, 2-acrylamido-2-methylpropanesulfonic acid, p-hydroxystyrene, 2,4-dihydroxy-4'-vinylbenzophenone, etc.

Examples of the $\alpha,\beta$-ethylenically unsaturated monomer having a hydroxyl group include hydroxyethyl (meth)acrylate, hydroxypropyl (meth)acrylate, hydroxybutyl (meth)acrylate, allyl alcohol, methallyl alcohol, and, adducts of these and $\varepsilon$-caprolactone, etc. Of these, preferred are hydroxyethyl (meth)acrylate, hydroxypropyl (meth)acrylate, hydroxybutyl (meth)acrylate, hydroxyethyl (meth)acrylate, and adducts of these and $\varepsilon$-caprolactone.

The mixture of the $\alpha,\beta$-ethylenically unsaturated monomers may further contain other $\alpha,\beta$-ethylenically unsaturated monomer. Examples of other $\alpha,\beta$-ethylenically unsaturated monomer include a polymerizable amide compound, a polymerizable aromatic compound, a polymerizable nitrile, a polymerizable alkylene oxide compound, a polyfunctional vinyl compound, a polymerizable amine compound, an $\alpha$-olefin, a diene, a polymerizable carbonyl compound, a polymerizable alkoxysilyl compound, and other polymerizable compound. The $\alpha,\beta$-ethylenically unsaturated monomers may be variously selected as required, depending on the purpose.

The acrylic resin emulsion can be prepared via emulsion polymerization of the mixture of the $\alpha,\beta$-ethylenically unsaturated monomers. The emulsion polymerization is not particularly limited, and may be performed according to any routine procedure. Specifically, the emulsion polymerization may be performed, for example, by dissolving an emulsifier in an aqueous medium including water, or an organic solvent such as an alcohol, an ether (e.g., dipropylene glycol methyl ether, propylene glycol methyl ether, etc.), as needed, and adding the mixture of the $\alpha,\beta$-ethylenically unsaturated monomers and a polymerization initiator dropwise to the emulsifier-containing aqueous medium with heating and stirring. The mixture of the $\alpha,\beta$-ethylenically unsaturated monomers may be emulsified beforehand using an emulsifier and water, and the emulsion may be added dropwise in a similar manner.

The polymerization initiator and the emulsifier may be those which are routinely employed by a person skilled in the art. The molecular weight may be regulated using a chain transfer agent such as a mercaptan including lauryl mercaptan and an $\alpha$-methylstyrene dimer, as needed. The reaction temperature, reaction time, etc. may be selected appropriately within the respective ranges commonly used by a person skilled in the art. The acrylic resin emulsion obtained through the reaction may be neutralized with a base, as needed.

The lower limit of the number average molecular weight of the acrylic resin in the acrylic resin emulsion is preferably 3,000. In addition, the lower limit and upper limit of the hydroxyl value (hydroxyl value of the solid content) of the acrylic resin in the acrylic resin emulsion are preferably 20 mgKOH/g and 180 mgKOH/g, respectively, and the lower limit and upper limit of the acid value (acid value of the solid content) are preferably 1 mgKOH/g and 80 mgKOH/g, respectively.

As referred to herein, the number average molecular weight is determined by a GPC method using polystyrene as a standard. As referred to herein, the acid value and the hydroxyl value are values calculated according to the definition in the JIS standard, based on the monomer composition used in the preparation.

The water-soluble acrylic resin can be prepared, for example, by subjecting a monomer mixture containing an $\alpha,\beta$-ethylenically unsaturated monomer which can be used in the preparation of the acrylic resin emulsion to solution polymerization, and solubilizing the product polymer in water with a basic compound. The acrylic resin dispersion can be prepared, for example, by subjecting a monomer mixture containing an $\alpha,\beta$-ethylenically unsaturated monomer which can be used in the preparation of the acrylic resin emulsion to solution polymerization, and dispersing the product polymer with a basic compound.

The polyester resin dispersion can be prepared, for example, by condensing a polyhydric alcohol component and a polybasic acid component, and dispersing the product polymer with a basic compound. The polyurethane resin dispersion can be prepared, for example, by polymerizing a polyol compound, a compound having an active hydrogen group and a hydrophilic group in the molecule, and an organic polyisocyanate, using a chain extender and a polymerization terminator as necessary, and dissolving or dispersing the resulting polymer in water.

When the coating composition is an aqueous coating composition, a curing agent which react with the coating-film-forming resin is preferably used. A melamine resin, a blocked isocyanate compound, an epoxy compound, an aziridine compound, a carbodiimide compound, an oxazoline compound, a metal ion or the like may be used as the curing agent. One type of these resins, compounds and ions may be used alone, or two or more types thereof may be used in combination. The components can be prepared according to any method commonly employed by a person skilled in the art. The components may be commercially available products. More preferably, the melamine resin and/or the blocked isocyanate compound is used as the curing agent.

The melamine resin may be a water-soluble melamine resin and/or a water-insoluble melamine resin. The melamine resin includes a structure in which hydrogen atoms or substituents (such as an alkyl ether group or a methylol group) are bonded to the periphery of a melamine nucleus (triazine nucleus) through three nitrogen atoms. The melamine resin generally has a multinuclear form with a plurality of melamine nuclei bonded to each other. Alternatively, the melamine resin may have a mononuclear form with one melamine nucleus.

The melamine resin may be a commercially available product. Specific examples of the commercially available product include: CYMEL series (tradename), specifically, CYMEL 202, CYMEL 204, CYMEL 211, CYMEL 232, CYMEL 235, CYMEL 236, CYMEL 238, CYMEL 250, CYMEL 251, CYMEL 254, CYMEL 266, CYMEL 267, CYMEL 272, CYMEL 285, CYMEL 301, CYMEL 303, CYMEL 325, CYMEL 327, CYMEL 350, CYMEL 370, CYMEL 701, CYMEL 703, and CYMEL 1141 from Allnex; and U-VAN (tradename) series from Mitsui Chemicals, Inc., etc. These may be used alone, or in a combination of two or more types thereof.

The blocked isocyanate compound can be prepared by the addition of a blocking agent having an active hydrogen to a polyisocyanate including trimethylene diisocyanate, hexamethylene diisocyanate, xylylene diisocyanate, isophorone diisocyanate, etc. In such a blocked isocyanate resin, the blocking agent is dissociated upon heating to generate an isocyanate group, and the isocyanate group reacts with a functional group in the resin component described above to result in the curing of the resin component.

The amount of the curing agent is preferably 5 to 100 parts by mass, and more preferably 10 to 80 parts by mass, based on 100 parts by mass of the solid content of the coating-film-forming resin.

The aqueous coating composition may contain, in addition to the components described above, additives commonly employed by a person skilled in the art, for example, a surface modifier, a viscosity control agent, a thickening agent, an antioxidant, an ultraviolet inhibitor, an antifoaming agent, etc. For example, the use of the viscosity control agent results in the impartment of thixotropy, and hence the adjustment of coating workability. Examples of the viscosity control agent include: crosslinked or uncrosslinked resin particles; polyamide-based agents such as a swollen dispersion of fatty acid amide, an amide fatty acid and a phosphate salt of long-chain polyaminoamide; polyethylene-based agents such as a colloidal swollen dispersion of oxidized polyethylene; organic bentonite-based agents such as organic acid smectite clay and montmorillonite, and the like. These additives, when employed, can be used in amounts commonly used by a person skilled in the art.

The aqueous coating composition may further contain a phosphoric-acid-group-containing organic compound in addition to the components described above. When the phosphoric-acid-group-containing organic compound is contained, the dispersibility of the pigment may be advantageously improved, by way of example. Furthermore, the orientation of the flake-shaped vapor-deposited metal pigment can be advantageously controlled favorably, for example, in the formation of the coating film, by way of example.

The aqueous coating composition may contain water, and optionally a water-soluble or water-miscible organic solvent as the solvent.

The production of the aqueous coating composition may be performed according to any method commonly employed by a person skilled in the art, e.g., a method that involves kneading and dispersing the flake-shaped vapor-deposited metal pigment, the coating-film-forming resin, and the curing agent, and other pigment, the phosphoric-acid-group-containing organic compound, and the additives, and the like, as needed, using a disperser, a homogenizer, a kneader, or the like. In the production method, for example, the flake-shaped vapor-deposited metal pigment and the optional phosphoric-acid-group-containing organic compound are preferably prepared beforehand and mixed.

Examples of the coating-film-forming resin in the case of the coating composition being a solvent-borne coating composition include an acrylic resin, and a polyester resin (including a urethane-modified polyester resin, etc.), and the like. One type of these resins may be used alone, or two or more types thereof may be used in combination.

The acrylic resin can be prepared, for example, through solution polymerization of a monomer mixture containing an $\alpha,\beta$-ethylenically unsaturated monomer. The acrylic resin preferably has a number average molecular weight of 1,000 to 20,000. In addition, the acrylic resin preferably has an acid value (acid value of the solid content) of 1 to 80 mgKOH/g, and more preferably 10 to 45 mgKOH/g. Further, the acrylic resin preferably has a hydroxyl value (hydroxyl value of the solid content) of 10 to 200 mgKOH/g.

The acrylic resin may be a commercially available product. Examples of the commercially available product include Dianal HR series from Mitsubishi Rayon Co., Ltd.

The amount of the acrylic resin is preferably 30 to 80% by mass, and more preferably 35 to 70% by mass, based on the mass of the solid content of the coating resin (the mass of the solid content of the coating-film-forming component).

For example, a hydroxyl group-containing polyester resin may be used as the polyester resin. The hydroxyl group-containing polyester resin can be prepared through polycondensation of an acid component such as a polyhydric carboxylic acid and/or an acid anhydride thereof and a polyhydric alcohol.

When the coating composition is a solvent-borne coating composition, a curing agent that reacts with the coating-film-forming resin is preferably used. A melamine resin, a blocked isocyanate compound, or the like may be used as the curing agent. One type of these curing agents may be used alone, or two or more types thereof may be used in combination. The component can be prepared according to any method commonly employed by a person skilled in the art. The component may be a commercially available product.

The curing agent preferably includes the melamine resin. The melamine resin is not particularly limited, and a methylated melamine resin, a butylated melamine resin, a methylated/butylated melamine resin mixture, and the like may be used. Examples of the melamine resin include CYMEL series commercially available from Allnex, U-VAN series commercially available from Mitsui Chemicals, Inc., etc. The amount of the melamine resin is preferably 10 to 50% by mass, and more preferably 15 to 40% by mass, based on the mass of the solid content of the coating resin (the mass of the solid content of the coating-film-forming component).

Furthermore, the curing agent preferably includes the blocked isocyanate compound. The blocked isocyanate compound can be prepared through the addition reaction of a blocking compound such as a compound having an active methylene group, a ketone compound or a caprolactam compound to a polyisocyanate. The blocked isocyanate compound may be a commercially available product. Examples of the commercially available product of the blocked isocyanate compound include DURANATE series from Asahi Kasei Corporation, Sumidur series from Sumika Covestro Urethane Co., Ltd., etc.

The amount of the blocked isocyanate compound contained in the coating composition is preferably 10 to 30% by mass, and more preferably 15 to 25% by mass, based on the mass of the solid content of the coating resin (the mass of the solid content of the coating-film-forming component).

The solvent-borne coating composition may contain, in addition to the components described above, additives commonly employed by a person skilled in the art, for example, a curing catalyst, a surface modifier, an ultraviolet absorbent, an antioxidant, etc.

The solvent-borne coating composition, when applied, may be appropriately adjusted in solid content concentration and viscosity by means of dilution with an organic solvent. Examples of a usable organic solvent include an ester solvent, an ether solvent, an alcohol solvent, a ketone solvent, an aliphatic hydrocarbon solvent, an aromatic solvent, etc.

The solvent-borne coating composition may further contain a phosphoric-acid-group-containing organic compound in addition to the components described above. When the phosphoric-acid-group-containing organic compound is contained, the dispersibility of the pigment may be advantageously improved, by way of example. Furthermore, the orientation of the flake-shaped vapor-deposited metal pigment can be advantageously controlled favorably, for example, in the formation of the coating film, by way of example.

The production of the solvent-borne coating composition may be performed according to any method commonly employed by a person skilled in the art, e.g., a method that involves kneading and dispersing the flake-shaped vapor-deposited metal pigment, the coating-film-forming resin, and the curing agent, and other pigment, the phosphoric-acid-group-containing organic compound, and the additives, and the like, as needed, using a disperser, a homogenizer, a kneader, or the like. In the production method, for example, a paste containing the flake-shaped vapor-deposited metal pigment and the optional phosphoric-acid-group-containing organic compound and/or pigment dispersant are preferably prepared beforehand and mixed.

Coating Film Formation

An object to be coated, to which the coating composition is applied, is not particularly limited, and examples thereof include metals, plastics, foams, etc. The coating composition can be advantageously used for metals and castings, in particular, and can be suitably used for metals applicable to electrodeposition coating, in particular. Examples of such metals include iron, copper, aluminum, tin, zinc, etc. and alloys containing these metals. The object to be coated may be a molded product. Specific examples of the molded product include automobile bodies of passenger automobiles, trucks, motorcycles, buses, etc., and parts thereof, and the like. The object such as metals, etc. is more preferably subjected to chemical conversion treatment with a phosphoric-acid-based chemical conversion treatment agent, a zirconium-based chemical conversion treatment agent, or the like before the electrodeposition coating. Preferably, a cured electrodeposition coating film is formed on the object after the optional chemical conversion treatment. An electrodeposition coating composition for use in the formation of the cured electrodeposition coating film may be cationic or anionic. The cationic electrodeposition coating composition is preferable for the electrodeposition coating composition, since the cationic electrodeposition coating composition allows for the formation of a coating film having more excellent corrosion resistance.

An intermediate coating film may be further formed, as needed, on the cured electrodeposition coating film provided on the object to be coated. An intermediate coating composition is used for the formation of the intermediate coating film. For example, a coating composition containing a coating-film-forming resin, a curing agent, various types of organic and/or inorganic coloring components, an extender pigment, and the like may be used as the intermediate coating composition. The coating-film-forming resin and the curing agent are not particularly limited, and specifically, the coating-film-forming resin and the curing agent, and the like which are mentioned in connection with the aqueous coating composition may be used. A combination of an acrylic resin and/or a polyester resin, and an amino resin and/or an isocyanate is suitably used as the coating-film-forming resin of the intermediate coating composition, from the viewpoint of various performances of the resulting intermediate coating film, etc.

Examples of the coloring component contained in the intermediate coating material include: a coloring component principally composed of carbon black and titanium dioxide (gray-tone intermediate coating composition); a coloring component principally composed of titanium dioxide (white-tone intermediate coating composition), and a coloring component exhibiting a hue similar to the hue of the topcoat base coating film (so-called color intermediate coating composition), etc.

The coating composition may be applied to the object to be coated, according to any procedure generally employed in the field of coating materials. Examples of the application method include air spray coating, airless spray coating, electrostatic spray coating, multi-stage coating (preferably, two-stage coating) by air electrostatic spray coating, coating by air electrostatic spray coating combined with a rotary atomizing electrostatic coater, etc.

The coating composition is preferably applied such that a dry film thickness in the range of 3 to 20 um is achieved.

Examples of a method for forming a coating film using the coating composition described above include the following methods.

- A method that involves applying the coating composition, and heating and curing the coating composition. After the heating and curing, a clear coating film may be provided, as needed.
- A method that involves applying the coating composition to form an uncured coating film, then applying a clear coating composition to form an uncured clear coating film, and heating and curing the resulting uncured coating films at the same time.
- A method that involves applying the coating composition, and thereafter drying the coating composition at ambient temperature to form a coating film. For example, a reaction-curable clear coating composition may be applied to provide a clear coating film, as needed.

In the method involving the application, heating and curing of the coating composition, the heating temperature and heating time can be appropriately selected depending on the composition (aqueous or solvent-borne) of the coating composition as well as the type of the object to be coated. The heating temperature can be appropriately selected, for example, in the range of 80 to 180°C, preferably in the range of 100 to 160°C, etc. The heating time can be appropriately selected, for example, in the range of 5 min to 60 min, preferably in the range of 10 min to 30 min, etc.

The clear coating composition is not particularly limited, and examples thereof include a solvent-borne clear coating composition, an aqueous clear coating composition, and a powder clear coating composition.

Preferable examples of the solvent-borne clear coating composition include a combination of an acrylic resin and/or a polyester resin, and an amino resin and/or isocyanate, or an acrylic resin and/or polyester resin having a carboxylic acid/epoxy curing system, etc. in light of the transparency or acid etching resistance, etc.

An example of the aqueous clear coating composition includes a composition which contains a resin obtained from the coating-film-forming resins mentioned as an example of the solvent-borne clear coating composition described above through neutralization with a base to render the resin water-soluble. This neutralization may be performed by the addition of a tertiary amine such as dimethylethanolamine or triethylamine before or after the polymerization.

The solvent-borne clear coating composition and the aqueous clear coating composition preferably contain a viscosity control agent in order to ensure coating workability. Any substance which generally exhibits thixotropy may be used as the viscosity control agent. Examples of the viscosity control agent include those mentioned in connection with the aqueous coating composition. The solvent-borne clear coating composition and the aqueous clear coating composition may additionally contain additives generally used in the field of coating materials, as needed.

For the powder clear coating composition, for example, any powder coating composition used generally in the field of coating materials, such as a thermoplastic powder coating composition, and a heat-curable powder coating composition may be used. Of these, the heat-curable powder coating composition is preferable in light of the physical properties of the coating film, etc. Specific examples of the heat-curable powder coating composition include epoxy-based, acryl-based and polyester-based powder clear coating compositions, etc.

The application of the clear coating composition may be performed according to any application method known to a person skilled in the art, depending on the application mode of the clear coating composition. Generally, the dry film thickness of the clear coating film formed by the application of the clear coating composition is preferably 10 to 80 $\mu$m, and more preferably 20 to 60 $\mu$m.

Heating and curing of an uncured clear coating film obtained after the application of the clear coating composition will produce a cured clear coating film. In the case where the clear coating composition is applied to a second uncured base coating film, these uncured coating films will be heated and cured upon heating. The heat and curing temperature is preferably 80 to 180°C, and more preferably 120 to 160°C from the viewpoints of the curability and the physical properties of the resulting multilayer coating film. The heating and curing time may be appropriately selected according to the temperature described above. Exemplary heating and curing conditions involve heating at a heating and curing temperature of 120°C to 160°C for 10 min to 30 min. Incidentally, the coating composition may be applied depending on the type of the coating composition, followed by drying at ambient temperature to form a coating film, and then, for example, a reaction-curable clear coating composition may be applied to provide a clear coating film.

The present invention satisfies the condition that a cured coating film formed through the application of the coating composition has a sparkle intensity (Si) of 5 or more at an incident angle of 45°, a sparkle area (Sa value) of 10 or more at an incident angle of 45°, and a graininess value (G value) of 5 or more and 10 or less, and a chroma C* of 5 or less. The sparkle intensity (Si) is an index indicative of the intensity of a sparkle, and a higher value of Si indicates more intense sparkle. The sparkle area (Sa value) is an index indicating an area (size) of a sparkling portion in terms of a numerical value. The graininess value (G value) is an index quantifying graininess in a coating film.

As referred to herein, the measurements of the sparkle intensity (Si), the sparkle area (Sa value) and the graininess value (G value) refer to values obtained in the measurement using a cured coating film of the coating composition with a film thickness of 15 um. More specifically, a coated sheet is provided which has a cured intermediate coating film with a lightness of 60 formed on a steel sheet coated with a cationic electrodeposition coating composition, then the coating composition is applied via spray coating to the coated sheet so as to achieve a coating film thickness of 15 um, then a clear coating composition is applied via spray coating thereto so as to achieve a film thickness of 35 um, and subsequently the coating compositions are heated and cured at 140°C for 20 min to obtain a cured coating film. The cured coating film is used to perform the measurement. The lightness of the cured intermediate coating film refers to a lightness obtained in the measurement according to the definition of JIS K 5600-4-3.

The sparkle intensity (Si) and the sparkle area (Sa value) refer to numerical values obtained by applying light from an LED light source to a coating film at an incident angle of 45°, acquiring an image with a CCD chip disposed perpendicular to the coating film, analyzing the acquired image according to an image analysis algorithm using a histogram of a brightness level, performing two-dimensional analysis to calculate parameters for sparkle and expressing the calculated parameters as sparkle intensity (Sparkle intensity = Si value) and sparkle area (Sparkle area = Sa value).

A value of the sparkle intensity (Si) of the cured coating film of 5 or more and a sparkle area (Sa value) of the cured coating film of 10 or more show that a cured coating film having a higher sparkle than conventional coating films is formed when the coating film is formed using a coating composition containing a coating-film-forming resin and a flake-shaped pigment.

The value of the sparkle intensity (Si) is preferably 5 or more and 50 or less, and more preferably 6 or more and 40 or less. The sparkle area (Sa value) is preferably 10 or more and 60 or less, and more preferably 10 or more and 40 or less.

The graininess value (G value) is a value obtained by quantifying the graininess by diffused illumination measurement. The graininess value (G value) is a numerical value that is obtained by acquiring an image with a CCD chip under diffused illumination in a white-coated hemisphere and analyzing the acquired image using a histogram of a brightness level, and expresses the uniformity of light-dark regions as one value indicative of the graininess. The graininess value (G value) is expressed in the range of 0 to 30, and a smaller G value indicates that the regions are finer, whereas a larger G value indicates that the regions are grainier.

A graininess value (G value) of the cured coating film of 5 or more and 10 or less shows that a cured coating film having higher graininess than conventional coating films and a distinctive design is formed when the coating film is formed using a coating composition containing a coating-film-forming resin and a flake-shaped pigment.

The sparkle intensity (Si), the sparkle area (Sa value) and the graininess value (G value) can be measured using an apparatus for impression of sparkling measurement. Examples of the apparatus for impression of sparkling measurement which can measure these values include BYK-mac (from BYK), etc.

In the present disclosure, a cured coating film of the coating composition has a chroma C* at an incident angle of 45° and a light-receiving angle of 45° of 5 or less. More specifically, when the direction of regularly reflected light of light incident at an angle of 45° from a cured coating film is designated as a 0° direction, the light-receiving angle mentioned above refers to a light-receiving angle offset from the 0° direction by an angle of 45° in the incident angle direction, that is, light reflected at the light-receiving angle is reflected at an angle perpendicular to the cured coating film.

The chroma C* is a parameter in the L*C*h color system, and can be determined in accordance with JIS Z8729. This L*C*h color system is a color system defined by the Commission Internationale de l'Éclairage and is described in Section 4.2 of CIE Publication 15.2(1986). In the L*C*h color system, L* represents lightness, C* represents chroma, and h represents hue angle. The chroma C* means that as the numerical value thereof increases, the saturation of a substance to be measured increases, whereas as the numerical value thereof decreases, the dullness of the substance increases. The chroma C* can be measured using a commercially available multi-angle spectrophotometer. Examples of the multi-angle spectrophotometer include MA-68II (from X-Rite, Incorporated), etc.

The cured coating film of the coating composition preferably has a flip-flop value of 1.1 or more and less than 2. As referred to herein, the flip-flop value (which may also be referred to as FF value) is a value indicating a degree of change in intensity of reflected light depending on a viewing angle (light-receiving angle). The FF value is obtained by measuring an L* value at a light-receiving angle of 15 degrees (L* (15°) value) and an L* value at a light-receiving angle of 110 degrees (L* (110°) value), and performing the calculation according to the following equation:

$$FF\ value = L^*\ (15°)\ value / L^*\ (110°)\ value$$

It should be noted that the L* value at a light-receiving angle of 15 degrees (L* (15°) value) is specifically an L* value for light which, when measurement light is introduced at an angle of 45 degrees (incident angle of 45 degrees) with respect to an axis perpendicular to the measurement target surface, is received in the direction at 15 degrees in the direction toward the measurement light from a regular reflection angle with respect to the incident angle. Further, the L* value at a light-receiving angle of 110 degrees (L* (110°) value) is an L* value for the light which, when measurement light is introduced in a similar manner, is received in the direction at an angle of 110° in the direction toward the measurement light from a regular reflection angle.

The L* value at a light-receiving angle of 15 degrees (L* (15°) value) and the L* value at a light-receiving angle of 110 degrees (L* (110°) value) can be measured using a commercially available multi-angle spectrophotometer.

A larger FF value indicates a larger change in L* value (brightness) due to the observation angle (light-receiving angle), and a smaller FF value indicates a smaller change in L* value (brightness) due to the observation angle (light-receiving angle). In common metallic coating films, a large FF value and a larger change in lightness depending on a viewing angle yield an impression of a higher degree of shade and shadow of the metallic coating film, and therefore these are often considered to be design targets. On the other hand, the coating film according to the present disclosure is characterized by a distinctive design where the entire coating film gives an impression of sparkling, while sparkling-impression-inducing graininess is also visually recognized, and further a pale-light color tone is also visually recognized. In such a coating film according to the present disclosure, the FF value is significantly smaller than that of common metallic coating films due to the characteristic that the pale-light color tone can be visually recognized. The FF value is more preferably from 1.2 to less than 2, and still more preferably 1.2 or more and 1.8 or less.

The coating film according to the present disclosure is characterized in that it has a high sparkle, has a high sparkle area, and entirely has an impression of sparkling, while sparkling-impression-inducing graininess and a pale-light color tone are also visually recognized. Due to these characteristics, the coating film exhibits a distinctive design where the entire coating film gives an impression of sparkling, while sparkling-impression-inducing graininess is also visually recognized, and further a pale-light color tone is also visually recognized. More specifically, the use of the coating composition according to the present disclosure allows for the formation of a coating film which leads to visual recognition of a pale-light color tone with a chroma C* as low as 5 or less and has a distinctive design where the coating film has a combination of a pale-light color tone and an impression of luminance with a relatively high graininess value, or G value, of 5 to 10.

EXAMPLES

In the following, the present invention will be described in detail with reference to specific Examples, but the present invention is not limited by the following Examples. In the Examples, "parts" and "%" are on a mass basis unless otherwise indicated.

Production Example 1: Production of Acrylic Resin Emulsion

(Coating-Film-Forming Resin)

To a reaction vessel was added 633 parts of deionized water, and the temperature thereof was raised to 80°C in a nitrogen gas flow with mixing and stirring. Then, a monomer emulsion composed of a first monomer mixture of 75.65 parts by mass of styrene (ST), 178.96 parts by mass of methyl methacrylate (MMA), 75.94 parts by mass of n-butyl acrylate (BA), 64.45 parts by mass of 2-ethylhexyl acrylate (2-EHA) and 105.00 parts by mass of hydroxyethyl methacrylate (HEMA), 25.00 parts of Aqualon HS-10 (polyoxyethylene alkyl propenylphenyl ether sulfate ester, from DKS Co. Ltd.), 25.00 parts of ADEKA REASOAP NE-20 ($\alpha$-[1-[(allyloxy)methyl]-2-(nonylphenoxy)ethyl]-$\omega$-hydroxyoxyethylene, from ADEKA Corporation) and 400 parts of deionized water, and an initiator solution composed of 1.2 parts of ammonium persulfate and 500 parts of deionized water were added dropwise in parallel to the reaction vessel over a period of 1.5 h. After the completion of the dropwise addition, aging was performed for 1 h at the same temperature. Furthermore, a monomer emulsion composed of a second monomer mixture of 53.65 parts by mass of styrene (ST), 178.96 parts by mass of methyl methacrylate (MMA), 75.94 parts by mass of n-butyl acrylate (BA), 64.45 parts by mass of 2-ethylhexyl acrylate (2-EHA), 105.00 parts by mass of hydroxyethyl methacrylate (HEMA) and 22 parts by mass of acrylic acid, 10 parts of Aqualon HS-10 and 250 parts of deionized water, and an initiator solution composed of 3.0 parts of ammonium persulfate and 500 parts of deionized water were added dropwise in parallel to the reaction vessel at 80°C over a period of 1.5 h. After the completion of the dropwise addition, aging was performed for 2 h at the same temperature. Then, the reaction mixture was cooled to 40°C, and filtered through a 400-mesh filter, followed by the adjustment of pH thereof to pH 6.5 by the addition of 100 parts of deionized water and 1.6 parts of dimethylaminoethanol, to give an emulsion of an acrylic resin having an average particle diameter of 150 nm, a non-volatile content of 350, an acid value of the solid content of 20 mgKOH/g, and a hydroxyl value of 100 mgKOH/g.

Production Example 2: Production of Phosphoric-Acid-Group-Containing Organic Compound

Into a one-liter reaction vessel equipped with a stirrer, a temperature controller and a condenser was charged 40 parts of ethoxypropanol, and thereto 121.7 parts of a monomer solution composed of 4 parts of styrene, 35.96 parts of n-butyl acrylate, 18.45 parts of ethylhexyl methacrylate, 13.92 parts of 2-hydroxyethyl methacrylate, 7.67 parts of methacrylic acid, 40 parts of a solution prepared by dissolving 20 parts of Phosmer PP (acid phosphoxyhexa(oxypropylene)monomethacrylate from Uni-Chemical (Yuni Kemikaru)) in 20 parts of ethoxy propanol, and 1.7 parts of azobisisobutyronitrile was added dropwise at 120°C for 3 h, and stirring was continued for another 1 h. The resulting phosphoric-acid-group-containing organic compound had an acid value of 105 mgKOH/g, including a phosphoric acid group value of 55 mgKOH/g, a hydroxyl value of 60 mgKOH/g, a number average molecular weight of 6,000, and a non-volatile content of 63%.

It should be noted that in the Examples in the present specification, the measurement of the number average molecular weight was performed using "HLC-8220GPC" (tradename, from Tosoh Corporation) as a GPC apparatus, and four "Shodex KF-606M" and "Shodex KF-603" (each from Showa Denko K.K., tradename) as columns under the following conditions: mobile phase: tetrahydrofuran; measurement temperature: 40°C; flow rate: 0.6 cc/min; and detector: RI. Further, in the Examples in the present specification, the acid value and phosphoric acid value of the phosphoric-acid-group-containing organic compound were determined by the calculation according to the definition of the acid value in JIS K5601 2-1 (mg number of potassium hydroxide (KOH) required to neutralize a free acid present in 1 g of a sample (non-volatile material)). In addition, the hydroxyl value was determined by the calculation according to the definition of the hydroxyl value in JIS K0070 (mg number of potassium hydroxide required to neutralize acetic acid bonded to a hydroxyl group in the acetylation of 1 g of a sample).

Example 1: Preparation of Aqueous Coating Composition

An aqueous coating composition having a resin solid content concentration of 33% by mass was prepared by uniformly dispersing 182 parts of the emulsion of the acrylic resin of Production Example 1, 2.2 parts of dimethylaminoethanol, 40 parts of CYMEL 327 (mixed alkylated melamine resin, from Allnex; solid content: 90%), 10 parts of ELgee neo Extra White #325 (flake-shaped vapor-deposited metal pigment, from OIKE & Co., Ltd.; average particle diameter (average major diameter): 35 um; active ingredient: 100%) (10 parts by mass based on 100 parts by mass of the resin solid content), 5 parts of the phosphoric-acid-group-containing organic compound of Production Example 2, 0.4 parts of lauryl acid phosphate, 50 parts of butyl cellosolve, 5.5 parts (3 parts in terms of the solid content) of NOIGEN EA-207D (amphiphilic compound, from DKS Co. Ltd.; number average molecular weight: 4,200; solid content: 55%), 3 parts of linoleic acid (from Kishida Chemical Co., Ltd.), adding dimethylaminoethanol thereto to achieve pH 8.1, and diluting the mixture with deionized water.

Example 2: Preparation of Aqueous Coating Composition

An aqueous coating composition was prepared according to a similar procedure to that in Example 1 except that the amount of ELgee neo Extra White #325 was changed to 40 parts (40 parts by mass based on 100 parts by mass of the resin solid content).

Example 3: Preparation of Aqueous Coating Composition

An aqueous coating composition was prepared according to a similar procedure to that in Example 1 except that 40 parts of ELgee neo Extra White #325 and 0.5 parts of particulate titanium oxide (MT-700HD, Tayca Corporation Co. Ltd.) were used.

Comparative Example 1: Preparation of Aqueous Coating Composition

An aqueous coating composition was prepared according to a similar procedure to that in Example 1 except that an aluminum paste 01-0651 (pulverized sparkling aluminum pigment, from Toyo Aluminium K.K.; active ingredient: 610; pulverized aluminum pigment) in an amount of 9 parts based on 100 parts by mass of the resin solid content was used in place of ELgee neo Extra White #325.

Comparative Example 2: Preparation of Aqueous Coating Composition

An aqueous coating composition was prepared according to a similar procedure to that in Example 1 except that in place of ELgee neo Extra White #325, an aluminum paste 01-0651 (pulverized sparkling aluminum pigment, from Toyo Aluminium K.K.; active ingredient: 610; pulverized aluminum pigment) in an amount of 8 parts based on 100 parts by mass of the resin solid content, and particulate titanium oxide (MT-700HD, Tayca Corporation Co. Ltd.) in an amount of 11 parts based on 100 parts by mass of the resin solid content.

The aqueous coating compositions prepared in the above Examples and Comparative Examples were used to perform the following evaluations. The results of the evaluations are shown in Table below.

Preparation of Coating Test Panel

A coated sheet was provided which was prepared by applying "Power Top U-50)" (from Nippon Paint Automotive Coatings Co., Ltd.), which was a cation electrodeposition coating composition, to a dull steel sheet treated with zinc phosphate and measuring 30 cm long by 40 cm wide by 0.8 mm thick via electrodeposition coating so as to achieve a dry film thickness of 20 um and baking it at 160°C for 30 min, and an intermediate coating composition "OP-30P middle gray" (polyester-melamine coating material, from Nippon Paint Automotive Coatings Co., Ltd.; diluted beforehand to 25 sec (measured at 20°C using a No. 4 Ford cup)) was applied to the coated sheet via air spray coating using an air spray gun W-101-132G from ANEST IWATA Corporation so as to achieve a dry film thickness of 35 $\mu$m, and then baked and cured at 140°C for 30 min, to form a cured intermediate coating film having a lightness of 60. Next, the aqueous coating compositions prepared in Examples or Comparative Examples were each applied via air spray coating so as to achieve a dry film thickness of 15 um at room temperature, i.e., 23°C, and a humidity of 680. After the setting for 4 min, preheating was performed at 80°C for 5 min. After the preheating, the coated sheet was allowed to cool to room temperature, and MACFLOW-O-1810 (solvent-borne clear coating material from Nippon Paint Automotive Coatings Co., Ltd.) as a clear coating material was applied via air spray coating so as to achieve a dry film thickness of 35 um, followed by setting for 7 min. Subsequently, the coated sheet was baked in a drying cabinet at 140°C for 30 min, to give a coating test panel having a multilayer coating film.

Measurement of Sparkle Intensity (Si), Sparkle Area (Sa value) and Graininess Value (G value)

The obtained coating test panels were used to determine their sparkle intensity (Si) at an incident angle of 45°, sparkle area (Sa value) at an incident angle of 45°,and Graininess Value (G value) in an impression of sparkling measurement using BYK-mac i (multi-angle (6-angle) colorimetry, an apparatus for impression of sparkling and granular measurement) from BYK to determine the values.

Measurement of Chroma C*

The obtained coating test panels were used to measure their chroma C* at an incident angle of 45° and a light-receiving angle of 45° using a multi-angle spectrophotometer MA-68II (from X-Rite, Incorporated).

Measurement of FF Value

For the obtained coating test panels, an L* value at a light-receiving angle of 15 degrees (L* (15°) value) and an L* value at a light-receiving angle of 110 degrees (L* (110°) value) at an incident angle of 45 degrees were measured using a multi-angle spectrophotometer MA-68II (trade name, from X-Rite, Incorporated), and an FF value was determined according to the following equation:

$$\text{FF value} = \text{L* (15°) value}/\text{L* (110°) value}$$

[Table 1]

| | Example 1 | Example 2 | Example 3 | Comparative Example 1 | Comparative Example 2 |
|---|---|---|---|---|---|
| Sparkle intensity (Si) | 9.3 | 8.7 | 6.9 | 7.0 | 6.7 |
| Sparkle area (Sa) | 27.1 | 30.3 | 26.6 | 21.1 | 23.1 |
| Graininess value (G value) | 9.1 | 8.6 | 6.0 | 4.8 | 4.0 |
| chroma C* | 2.6 | 1.6 | 1.6 | 2.1 | 4.8 |
| L* (15°) value | 84.4 | 93.8 | 96.9 | 111.1 | 114.9 |

(continued)

|  | Example 1 | Example 2 | Example 3 | Comparative Example 1 | Comparative Example 2 |
|---|---|---|---|---|---|
| L* (110°) value | 58.5 | 56.9 | 67.0 | 26.3 | 51.2 |
| FF value (L*15°/110°) | 1.4 | 1.6 | 1.4 | 4.2 | 2.2 |

All of the coating films formed using the coating compositions of Examples had high sparkle intensity (Si), sparkle area (Sa value) and graininess value (Ga value), and the entire coating film gave an impression of sparkling, while sparkling-impression-inducing graininess was also recognized visually. Further, a pale-light color tone was visually recognized from the coating films. Comparative Examples 1 is an example where a pulverized aluminum pigment is used. In this Comparative Example, it was demonstrated that the sparkle intensity (Si) and the sparkle area (Sa value) were high and the entire coating film gave an impression of sparkling, while the graininess value was low, and sparkling-impression-inducing graininess was low. Comparative Example 2 is an example where a pulverized aluminum pigment and a white pigment (particulate titanium oxide) were used. In this Example, a pale-light color tone was visually recognized from the coating film due to the presence of the white pigment. Further, the coating film had a high sparkle intensity (Si) and a high sparkle area (Sa value), and the entire coating film gave an impression of sparkling. On the other hand, it was confirmed that the coating film had a low graininess value, and sparkling-impression-inducing graininess was low.

INDUSTRIAL APPLICABILITY

A coating film formed using the coating composition according to the present disclosure has high sparkle, and further exhibits a distinct design where the coating film has a high sparkle area, and the entire coating film gives an impression of sparkling, while sparkling-impression-inducing graininess and a pale-light color tone are also recognized visually. The coating film can be suitably used as a designable coating film for various articles.

**Claims**

1. A coating composition comprising a coating-film-forming resin and a pigment, wherein

    the pigment comprises a flake-shaped vapor-deposited metal pigment,
    a cured coating film of the coating composition has a sparkle intensity (Si) of 5 or more at an incident angle of 45°, a sparkle area (Sa value) of 10 or more at an incident angle of 45°, and a graininess value (G value) of 5 or more and 10 or less, and
    the cured coating film has a chroma C* at an incident angle of 45° and a light-receiving angle of 45° of 5 or less.

2. The coating composition according to claim 1, wherein the cured coating film has a flip-flop value of 1.1 or more and less than 2.

3. The coating composition according to claim 1 or 2, wherein the flake-shaped vapor-deposited metal pigment has a first protective layer, a vapor-deposited metal layer and a second protective layer in this order, and
    the flake-shaped vapor-deposited metal pigment has an average particle diameter of 10 to 150 um, an average thickness of 0.5 to 10 $\mu$m, and an aspect ratio of 5 to 50.

4. The coating composition according to claim 3, wherein the first and second protective layers each have an average thickness of 0.5 to 3 um, and
    the vapor-deposited metal layer has an average thickness of 5 to 100 nm.

5. The coating composition according to claim 3 or 4, wherein the first and second protective layers each comprise a silicone component.

6. The coating composition according to any one of claims 3 to 5, wherein the vapor-deposited metal layer comprises aluminum.

7. The coating composition according to any one of claims 1 to 6, wherein an amount of the flake-shaped vapor-deposited metal pigment comprised in the coating composition is in a range of 0.1 to 40 parts by mass based on 100 parts by mass of a resin solid content of the coating-film-forming resin.

8. A method for producing a cured coating film, the method comprising applying the coating composition according to any one of claims 1 to 7 to an object to be coated, and subsequently heating and curing the coating composition, wherein
the cured coating film has a sparkle intensity (Si) of 5 or more at an incident angle of 45°, a sparkle area (Sa value) of 10 or more at an incident angle of 45°, and a graininess value (G value) of 5 or more and 10 or less, and a chroma C* at an incident angle of 45° and a light-receiving angle of 45° of 5 or less.

9. An article comprising a cured coating film of the coating composition according to any one of claims 1 to 7.

## INTERNATIONAL SEARCH REPORT

| | International application No. |
|---|---|
| | PCT/JP2021/023470 |

| A. CLASSIFICATION OF SUBJECT MATTER |
|---|
| Int. Cl. C09C1/64(2006.01)i, C09C3/12(2006.01)i, C09D5/29(2006.01)i, C09D201/00(2006.01)i, C09D7/62(2018.01)i<br>FI: C09D201/00, C09D7/62, C09D5/29, C09C1/64, C09C3/12<br>According to International Patent Classification (IPC) or to both national classification and IPC |

| B. FIELDS SEARCHED |
|---|
| Minimum documentation searched (classification system followed by classification symbols)<br>Int. Cl. C09D1/00-201/10, C09C1/00-3/12 |
| Documentation searched other than minimum documentation to the extent that such documents are included in the fields searched<br>Published examined utility model applications of Japan 1922-1996<br>Published unexamined utility model applications of Japan 1971-2021<br>Registered utility model specifications of Japan 1996-2021<br>Published registered utility model applications of Japan 1994-2021 |
| Electronic data base consulted during the international search (name of data base and, where practicable, search terms used) |

| C. DOCUMENTS CONSIDERED TO BE RELEVANT | | |
|---|---|---|
| Category* | Citation of document, with indication, where appropriate, of the relevant passages | Relevant to claim No. |
| A | WO 2017/135426 A1 (KANSAI PAINT CO., LTD.) 10 August 2017 (2017-08-10), entire text | 1-9 |
| A | WO 2019/131957 A1 (KANSAI PAINT CO., LTD.) 04 July 2019 (2019-07-04), entire text | 1-9 |
| A | JP 2012-232236 A (KANSAI PAINT CO., LTD.) 29 November 2012 (2012-11-29), entire text | 1-9 |
| A | WO 2017/217471 A1 (NIPPON PAINT AUTOMOTIVE COATINGS CO., LTD.) 21 December 2017 (2017-12-21), entire text | 1-9 |
| A | JP 2008-237939 A (BASF COATINGS JAPAN LTD.) 09 October 2008 (2008-10-09), entire text | 1-9 |

☒ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02.09.2021 | 14.09.2021 |

| Name and mailing address of the ISA/<br>Japan Patent Office<br>3-4-3, Kasumigaseki, Chiyoda-ku,<br>Tokyo 100-8915, Japan | Authorized officer |
|---|---|
| | Telephone No. |

Form PCT/ISA/210 (second sheet) (January 2015)

**INTERNATIONAL SEARCH REPORT**

International application No.

PCT/JP2021/023470

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2006-028618 A (SUMITOMO METAL MINING CO., LTD.) 02 February 2006 (2006-02-02), entire text | 1-9 |
| A | JP 2004-131542 A (ASAHI KASEI CHEMICALS CORP.) 30 April 2004 (2004-04-30), entire text | 1-9 |

# EP 4 177 315 A1

| INTERNATIONAL SEARCH REPORT | | International application No. |
| Information on patent family members | | PCT/JP2021/023470 |

| Patent Documents referred to in the Report | Publication Date | Patent Family | Publication Date |
|---|---|---|---|
| WO 2017/135426 A1 | 10.08.2017 | US 2019/0001370 A1<br>entire text<br>EP 3412445 A1<br>CN 108602310 A | |
| WO 2019/131957 A1 | 04.07.2019 | JP 2019-119884 A<br>JP 6533863 B1<br>CN 111511855 A | |
| JP 2012-232236 A | 29.11.2012 | (Family: none) | |
| WO 2017/217471 A1 | 21.12.2017 | US 2019/0329291 A1<br>entire text<br>EP 3473686 A1<br>CA 3027833 A1<br>CN 109415593 A | |
| JP 2008-237939 A | 09.10.2008 | US 2009/0075100 A1<br>entire text<br>WO 2006/056866 A1 | |
| JP 2006-028618 A | 02.02.2006 | (Family: none) | |
| JP 2004-131542 A | 30.04.2004 | (Family: none) | |

Form PCT/ISA/210 (patent family annex) (January 2015)

18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019131957 A